# EUROPEAN PATENT APPLICATION

(11) **EP 4 498 632 A1**
(43) Date of publication of application: **29.01.2025**
(21) Application number: 23315297.4
(22) Date of filing: 27.07.2023
(51) Int. Cl.: H04L 9/00

(54) **METHOD TO SECURE A SOFTWARE CODE AGAINST SUPERVISED SIDE CHANNEL**

(71) Applicant: THALES DIS FRANCE SAS, 92190 Meudon (FR)
(72) Inventor: Buorbau, Eric, 83330 LE BEAUSSET (FR); Olivier, Francis, 13400 AUBAGNE (FR)
(74) Representative: Bricks, Amélie

(57) **Abstract**

The present invention relates to a method for securing against supervised side-channel attacks a secret data stored as at least one N-bit machine word and used in a sensitive operation to be executed by a processing device among a plurality of processing devices having M-bit words architectures, with M and N integers and N < M,
wherein a pool of constant values is associated to each processing device of said plurality of processing devices, each pool of constant values associated to a processing device being different than the pool of constant values associated to the other processing devices of the plurality of processing devices,
said method being performed by a processor of a first processing device among said plurality of processing devices and comprising:
- for each N-bit machine word of said secret data: encoding and storing in a memory of said first processing device, said N-bit machine word as a M-bit machine word comprising said N bits of said N-bit machine word and a constant value selected from said pool of constant values associated to the first processing device (S1),
- executing said sensitive operation using said secret data M-bit machine words stored in said memory (S2).

## Description

### FIELD OF THE INVENTION

The present invention relates to the field of data protection against side channel attacks. It discloses more particularly a method protecting against supervised side channel attacks.

### BACKGROUND OF THE INVENTION

Sensitive information, such as secret keys to be used in cryptographic algorithms are usually protected in order to prevent any access to it by an attacker, even when the attacker has full control of the device performing sensitive operations accessing such sensitive information. Nevertheless, algorithms performing these sensitive operations are sensitive to side-channel attacks (SCA), based on an analysis of traces left by the device when performing the operation, such as power consumption or electromagnetic emissions. As an example, in the so-called "divide and conquer" approach, SCA can be used to retrieve some words or a share of a secret private key when used in a cryptographic operation as exponent of a modular exponentiation, or when used in the frame of an Elliptic curve cryptography (ECC) protocol, such as ECDSA, for deriving a new point of an elliptic curve by performing a scalar multiplication.

A particularly efficient type of side channel attacks is called supervised side channel attacks. Such attacks are usually conducted in two steps. First, during a learning step a device owned by the attacker and similar to the one targeted by the attack is used to collect multiple traces and build a behavioral model of the device using machine learning. Then, during a matching phase, traces from the execution by a legitimate device of a sensitive operation using a secret data are collected. Then, the comparison of these traces with the learned model is exploited by the attacker to infer some information about the secret.

Various countermeasures have been designed, including masking with a random mask or a static mask, desynchronizing the execution by inserting fake operations in the execution flow, or shuffling but none of these methods is effective enough against supervised attacks using a large number of traces and/or traces above the first order, or it has a prohibitive cost.

Supervised side channel attacks may be difficult to perform successfully when data words are at least 32-bit long. Indeed, the inference of a secret data based on traces becomes faulty when the length of the secret data gets bigger than around 8 bits. Nevertheless, such 32-bit long words stored in a memory of the device at execution may in fact contain only a few bits, 8 for example, of useful data, other bits being padding or default. In such a case, an attacker only needs to infer the value of the few useful bits to get the knowledge of the secret data. He doesn't need to infer the value of the padding which will only result in a constant bias of the inferred data (when using a constant padding) or in traces components which will be statistically canceled by using a large number of traces (when the padding is random). And retrieving only 8 bits of data from memory by side channel analysis is much easier.

Therefore, there is still a need to improve the protection against supervised SCA attacks such that the secret data cannot be inferred, even from a large number of traces, at a reasonable cost.

### SUMMARY OF THE INVENTION

For this purpose and according to a first aspect, this invention therefore relates to a method for securing against supervised side-channel attacks a secret data stored as at least one N-bit machine word and used in a sensitive operation to be executed by a processing device among a plurality of processing devices having M-bit words architectures, with M and N integers and N < M,
wherein a pool of constant values is associated to each processing device of said plurality of processing devices, each pool of constant values associated to a processing device being different than the pool of constant values associated to the other processing devices of the plurality of processing devices,
said method being performed by a processor of a first processing device among said plurality of processing devices and comprising:
   - for each N-bit machine word of said secret data: encoding and storing in a memory of said first processing device, said N-bit machine word as a M-bit machine word comprising said N bits of said N-bit machine word and a constant value selected from said pool of constant values associated to the first processing device,
   - executing said sensitive operation using said secret data M-bit machine words stored in said memory.

Such a protection enables to extend the length of the secret data in order to protect it against supervised SCA. Since the constant value used for padding is different from one device to another, a model trained at a training step using a first device will not be trained with the constant value used for padding by another device to be attacked at a matching step. And such a padding induces a constant bias which cannot be defeated by a statistical combination of multiple traces, as a pure random padding could be.

Said pool of constants associated to a processing device may comprise, for each machine word of said secret data, a different constant value associated to said word and said constant value selected for encoding a N-bit machine word of said secret data as a M-bit machine word may be the constant value associated to said encoded N-bit word in the pool of constant values associated to the processing device.

By doing so, the protection is made even better since different constant values are used by the same device for protecting different words of the same data.

Said constants may be generated at random.

Said pool of constants may be shuffled before encoding and storing in said memory.

Said sensitive operation may be among a secure XOR operation, a secure compare operation or a secure copy operation.

In an embodiment, each constant value of the pool may have a length of k bits, with k an integer and k+ N < M, and each M-bit machine word encoding a N-bit machine word and stored in said memory may comprise said N bits of the N-bit machine word, a constant of said pool and a random binary value of length M-(N+k) bits.

Such an embodiment enables to add even more complexity to the protection, making it harder for an attacker to bypass it. Even a model trained on the device to be attacked itself would not provide accurate inference because of the random part of the padding.

According to a second aspect, this invention relates to a processing device comprising a processor configured for performing the steps of the method according to the first aspect.

According to a third aspect, this invention relates to a system comprising a plurality of processing devices, each processing device comprising a processor configured for performing the steps of the method according to the first aspect.

According to a fourth aspect, this invention relates to a computer program product directly loadable into the memory of at least one computer, comprising software code instructions for performing the steps of the method according to the first aspect, when said product is run on the computer.

To the accomplishment of the foregoing and related ends, one or more embodiments comprise the features hereinafter fully described and particularly pointed out in the claims.

### BRIEF DESCRIPTION OF THE DRAWINGS

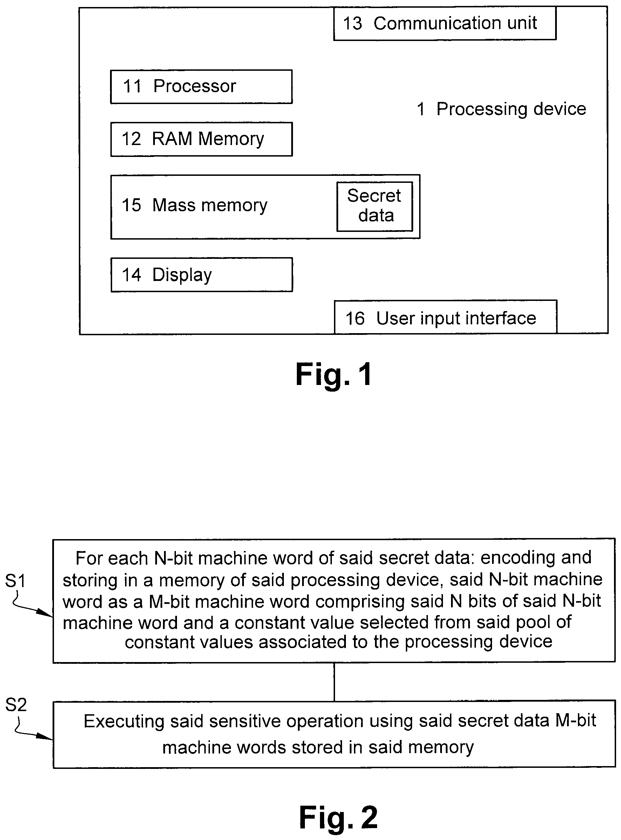

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
▪ Figure 1 illustrates schematically a processing device according to an embodiment of the present invention;
▪ Figure 2 illustrates schematically a method for securing against supervised side-channel attacks a secret data according to an embodiment of the present invention.

### DETAILED DESCRIPTION OF EMBODIMENTS OF THE INVENTION

The invention aims at securing a secret data against side-channel attacks (SCA), and especially against supervised SCA. Such a secret data may for example be a sensitive data such as a secret key or a private key used in a cryptographic process to be executed by a processing device.

The architecture of this processing device is supposed to be based on memory words have a length of M bits, which is also called a M-bit words architecture. As an example, M may be equal to 16, 32, 64 or 128.

Such a processing device 1 may be any electronic device including a processor. For example, it may be a personal computer PC, a server, a smartphone or a smartcard. **Figure 1** describes an exemplary embodiment of such a securing device 1 comprising a processor 11, a RAM memory 12, a communication unit 13 such as an Ethernet or Wifi network adapter, a display 14, a mass memory 15 such as a hard drive, and a user input interface 16. The secret data to be protected may for example be stored on the mass memory 15 of the processing device.

The secret data is supposed to be stored as at least one N-bit machine word with N an integer lower than M: N < M. As described above, in such a case an attacker would only have to guess the N useful bits of the secret data for fully recovering it. And it would be all the more easy that N is small.

As an example, Java standard for smart cards specifies 8 bit or 16 bit variables but smart cards on which it is implemented usually have a 32 bit architecture.

In order to protect against SCA low length machine words, the main idea of the method according to the invention is to extend the length of such N-bit machine words to M bits using a particular padding which is a constant value, which is not reset at each operation, and which is specific to the processing device, two different processing devices using different constant values for their padding.

Such a padding is therefore not a random value redrawn at each operation. Several operations performed by the same processing device will rather use the same constant value for padding the secret data. Therefore, an attacker cannot statistically nullify the padding by combining traces from multiple different operations. In addition, different processing devices will use different values for padding the secret data. This is particularly interesting against supervised SCA. Indeed, in such an attack, a training device is used for training an inference model. If this device extends the length of a secret data using a constant padding according to the invention, it will use its own constant value. Then, during the matching phase, the attacker will collect traces from a target device in order to guess, using the trained model, a secret data used by this target device. According to the invention, the target device will protect its secret data by padding it using its own constant value, which is different than the one used by the training device. Therefore, the secret data will be protected using a padding which is different than the one used when training the inference model and the model will not correctly predict the value of the secret data.

In order to ensure that the constant value used for padding is specific to the processing device, assuming that the processing device is one processing device among a plurality of processing devices having M-bit words architectures, a pool of constant values is associated to each processing device of this plurality of processing devices, each pool of constant values associated to a processing device being different than the pool of constant values associated to the other processing devices of the plurality of processing devices. The constant values of each pool of constant values may be generated at random once and for all, for example at the processing device production stage, in factory, or just before delivery of the device to a client.

The following paragraphs describe the steps of the method according to the first aspect of the invention, securing the secret data when the processing device, hereafter called first processing device, performs a sensitive operation using this secret data, as depicted on **Figure 2**.

During a first step S1, the first processing device encodes each N-bit machine word of the secret data as a M-bit machine word comprising the N bits of the N-bit machine word and a constant value selected from the pool of constant values associated to the first processing device. The resulting one or more secret data M-bit machine words are stored in a memory of the first processing device.

In a first embodiment, the first processing device uses the same constant value for encoding all the N-bit machine words of the secret data as M-bit machine words.

In another embodiment, the pool of constants associated to a processing device comprises, for each machine word of a secret data, a different constant value associated to this word. Said differently, the pool of constants comprises a first constant value to be used for encoding a first N-bit machine word of a secret data, a second constant value to be used for encoding a second N-bit machine word of the same secret data, etc... In such an embodiment, at the first step S1, the constant value selected by the first processing device for encoding a N-bit machine word of the secret data as a M-bit machine word is the constant value associated to the encoded N-bit word in the pool of constant values associated to the first processing device. For example, when the first processing device is in the process of encoding the third N-bit word of the secret data, it will select the constant value designated in the pool of constant values to be used for encoding the third machine word of any secret data to be encoded.

For a better security the pool of constant values associated to the first processing device may be shuffled before encoding. In such a case, the selected constant value is drawn randomly from the pool of constant values associated to the first processing device.

The constant values in the pool of constant values may be of length (M-N) bits such that padding the N-bits of the secret data with one of these constant values results in a M-bit long word.

Alternatively, a mixt padding with both a constant value and a random value can be used. In order to do so, each constant value of the pool has a length of k bits with k an integer and k+ N < M. In such a case, padding the secret data of length N with a constant value is not sufficient to extend the length of the secret data to M bits. Therefore, in such a case, the secret data is encoded by the first processing device as a M-bit machine word comprising the N bits of the N-bit machine word, a constant of said pool and a random binary value of length M-(N+k) bits.

During a second step S2, the first processing device executes the sensitive operation using the secret data M-bit machine words stored in a memory of the first processing device.

The executed sensitive operation may be among an encryption operation, a decryption operation, generating a signature. It may be an operation linked to such cryptographic operations such as a memory load, store, or copy of a cryptographic key, a seed or a nonce... It may for example be a secure XOR operation, a secure compare operation or a secure copy operation. As an example, the sensitive operation may be performed before or after a cryptographic operation in order to provide an input to the cryptographic operation or to process its result.

**In a second aspect,** the invention also relates to a processing device 1 comprising a processor 11 described here above and configured for performing the steps of the method according to the first aspect.

**In a third aspect,** the invention also relates to a system comprising a plurality of processing devices, each processing device 1 comprising a processor 11 configured for performing the steps of the method according to the first aspect.

**In a fourth aspect,** the invention also relates to a computer program product directly loadable into the memory of at least one computer, comprising software code instructions for performing the steps of the method according to the first aspect, when said product is run on the computer.

As a result, the method, processing device, system and computer program described above enable to protect data encoded as M-bit machine words against supervised SCA attacks. Whatever the number of traces collected by the attacker at the matching step, the model used to infer the protected data will always have been trained on data encoded with a constant value different than the one used for padding the protected data at the matching step, which will yield to a poor predictive capability of the model. In addition, the protective method according to the invention has a limited cost since it only requires the additional operation of encoding the N-bit words to be protected into M-bit words once. It doesn't add any significant computation overhead at runtime when the sensitive operation is performed using the protected data.

## Claims

1. A method for securing against supervised side-channel attacks a secret data stored as at least one N-bit machine word and used in a sensitive operation to be executed by a processing device (1) among a plurality of processing devices having M-bit words architectures, with M and N integers and N < M,
wherein a pool of constant values is associated to each processing device of said plurality of processing devices, each pool of constant values associated to a processing device being different than the pool of constant values associated to the other processing devices of the plurality of processing devices,
said method being performed by a processor (11) of a first processing device among said plurality of processing devices and comprising:
- for each N-bit machine word of said secret data: encoding and storing in a memory of said first processing device, said N-bit machine word as a M-bit machine word comprising said N bits of said N-bit machine word and a constant value selected from said pool of constant values associated to the first processing device (S1),
- executing said sensitive operation using said secret data M-bit machine words stored in said memory (S2).

2. The method of claim 1, wherein said pool of constants associated to a processing device comprises, for each machine word of said secret data, a different constant value associated to said word and wherein said constant value selected for encoding a N-bit machine word of said secret data as a M-bit machine word is the constant value associated to said encoded N-bit word in the pool of constant values associated to the processing device.

3. The method of claim 1 or 2, wherein said constants are generated at random.

4. The method of any one of claims 1 to 3, wherein said pool of constants is shuffled before encoding and storing in said memory.

5. The method of any one of claims 1 to 4, wherein said sensitive operation is among a secure XOR operation, a secure compare operation or a secure copy operation.

6. The method of any one of claims 1 to 5, wherein each constant value of the pool has a length of k bits, with k an integer and k+ N < M, and each M-bit machine word encoding a N-bit machine word and stored in said memory comprises said N bits of the N-bit machine word, a constant of said pool and a random binary value of length M-(N+k) bits.

7. A processing device (1) comprising a processor (11) configured for performing the steps of the method of any one of claims 1 to 6.

8. A system comprising a plurality of processing devices, each processing device (1) comprising a processor (11) configured for performing the steps of the method of any one of claims 1 to 6.

9. A computer program product directly loadable into the memory of at least one computer, comprising software code instructions for performing the steps of the method of any one of claims 1 to 6, when said product is run on the computer.
